(19) Europäisches Patentamt
European Patent Office
Office européen des brevets

(11) **EP 0 739 391 B1**

(12) **EUROPEAN PATENT SPECIFICATION**

(45) Date of publication and mention
of the grant of the patent:
**07.10.1998 Bulletin 1998/41**

(21) Application number: **95906333.0**

(22) Date of filing: **10.01.1995**

(51) Int Cl.[6]: **C09D 9/00**, C11D 7/50

(86) International application number:
**PCT/EP95/00096**

(87) International publication number:
**WO 95/18843 (13.07.1995 Gazette 1995/30)**

(54) **CLEANER COMPOSITION**

REINIGUNGS-ZUSAMMENSETZUNG

COMPOSITION DE NETTOYAGE

(84) Designated Contracting States:
**AT BE CH DE DK ES FR GB IT LI NL SE**

(30) Priority: **11.01.1994 EP 94200043**

(43) Date of publication of application:
**30.10.1996 Bulletin 1996/44**

(73) Proprietor: **SHELL INTERNATIONALE
RESEARCH MAATSCHAPPIJ B.V.
2596 HR Den Haag (NL)**

(72) Inventors:
• **BEERS, Nicolaas, Cornelis, Maria
NL-1031 CM Amsterdam (NL)**
• **KEYZER, Lucas, Petrus, Simon
NL-1031 CM Amsterdam (NL)**

(74) Representative:
**Zeestraten, Albertus Wilhelmus Joannes et al
Shell International B.V.,
Intellectual Property Services,
P.O. Box 384
2501 CJ The Hague (NL)**

(56) References cited:
**US-A- 5 145 523**

• **DATABASE WPI Derwent Publications Ltd.,
London, GB; AN 93-164790[20] & JP,A,5 098 293
(NIPPON PETROCHEMICALS CO. LTD.) 20 April
1993**
• **DATABASE WPI Derwent Publications Ltd.,
London, GB; AN 93-164789[20] & JP,A,5 098 292
(NIPPON PETROCHEMICALS CO. LTD.) 20 April
1993**
• **DATABASE WPI Derwent Publications Ltd.,
London, GB; AN 93-104544[13] & JP,A,5 043 893
(NIPPON PETROCHEMICALS CO. LTD.) 23
February 1993**
• **DATABASE WPI Derwent Publications Ltd.,
London, GB; AN 932171131[27] & JP,A,5 140 591
(SANKEN KK) 8 June 1993**
• **DATABASE WPI Derwent Publications Ltd.,
London, GB; AN 87-038955[06] & JP,A,1 293 274
(RICOH KK ET AL) 24 December 1986**

**Description**

This invention relates to the use of a cleaner composition based on hydrocarbon solvents for removing ink. In particular, the invention relates to a cleaner composition suitably applied in the removal of ink, pigments and impurity residues from metal and rubber components of apparatus used in the main printing processes, viz. letterpress, lithography, gravure, flexography and screen printing (cf. chapter 2 of "The Printing Ink Manual", 4th ed. by R.H. Leach, (1988) ISBN 0-7476-0000-7). More in particular, the invention relates to a cleaner composition which can be applied in the removal of off-set printing ink, and undesirable residues from cylinders and rubber coatings encountered in offset lithographic processes.

Industrial solvents are used in a wide variety of applications, amongst others in cleaner compositions. They may be classified in two categories, i.e., hydrocarbon solvents which contain carbon and hydrogen, and chemical solvents which contain other atoms besides carbon and hydrogen such as chlorine, oxygen, nitrogen, etc. Hydrocarbon solvents may in turn be divided into the subclasses of aromatics and aliphatics.

Industry, amongst them the printing industry, has previously used cleaner compositions based on chemical solvents, in particular halogenated hydrocarbons, and/or cleaner compositions containing aromatic hydrocarbons. It will be appreciated that recent legislation and environmental concerns have made it necessary to replace these cleaner compositions with reformulated non-aromatic, halogen-free cleaner compositions. Moreover, such reformulated non-aromatic, halogen-free cleaner composition should:

- treadily remove the aforementioned contaminants (superior dissolving power for ink and undesirable residues) without unfavourable effects on the parts of the printing machine (e.g., no rubber-swell);
- readily vaporise (Relative Evaporation Rate, according to ASTM D 3539 of at least 0.01 relative to n-butylacetate) without introducing fire hazards (having a flash point in excess of 40 °C, preferably in excess of 55 °C, to satisfy storage and transport classification A III);
- have low toxicity, such that labelling neither as a toxic substance, nor as a skin- or eye irritant, nor as a harmful substance is required (respectively "T", "$X_i$" or "$X_n$" labels according to EC Directive 67-548); and
- be a single phase, detergent-free composition, so as to allow the removal of contaminants and the use of the machinery thus decontaminated in one single step without leaving residual material.

It will be realised that several of the requirements mentioned above are difficult to attain together. Therefore, in the art of cleaner compositions, in particular in the art applicable to the printing industry, some sacrifices have been made. From US patent specification 5,104,567 environmentally acceptable and biodegradable cleaner compositions are known. However, such cleaner compositions contain an emulsifier that needs to be removed in a subsequent step. Likewise commercial cleaners are known (e.g., Tryk A (tm), a vegetable cleaner based on coconut and soya bean oil exemplified hereinafter) that, although free of detergent, evaporates too slowly, thereby also requiring a subsequent washing step. On the other hand, from Japanese patent applications 57,202,399 and 61,293,274 non-detergent cleaner compositions are known that combine good solvent tower with low odour and toxicity. However, these compositions are based on a kerosene fration, i.e., the straight run distillate fraction boiling from 150 to 300 °C and containing besides paraffins and olefins also substantial amounts of aromatic hydrocarbons (depending on the grade crude oil, e.g., about 20% for Arabian Crude). Further, these kerosene fractions have too low flash point, which makes them dangerous.

The aim has been to provide a cleaner composition that satisfies the requirements, i.a. in that no halogen containing compound needs to be present. Accordingly the present invention relates to the use of a cleaner composition for removing ink, which cleaner composition comprises

a) one or more aliphatic hydrocarbon solvents;
b) from 2-40 %wt of one or more (i) monohydric alcohols and/or (ii) polyhydric alcohols, each having a hydrogen bonding index (HBI) of less than 0 and a relative evaporation rate (RER) of at least 0.005; and
c) from 0-30 %wt of one or more glycol ethers and/or esters, wherein the composition has a flash point of 50-80 °C and contains at most 1% by weight of aromatic hydrocarbons.

As used throughout the application, the singular aliphatic hydrocarbon solvent, monohydric alcohol, polyhydric alcohol, glycol ether and ester refers to the singular or plural one or more of such compounds unless otherwise indicated. In view of the safety regulations, the flash point of the composition is to be at least 50 °C, preferably at least 55 °C. Preferably, the flash point is of from 55-75 °C.

A preferred aliphatic hydrocarbon solvent has a boiling range of 150 to 270 °C at 1 bara, and contains at most 0.5% by weight of aromatic hydrocarbons (amount of aromatic hydrocarbons on total amount of hydrocarbons). More preferably, such aliphatic hydrocarbon solvent has a boiling range of 175 to 250 °C at 1 bara, and contains at most 0.1% of aromatic hydrocarbons, if any at all.

The aliphatic hydrocarbon solvent is therefore essentially composed of paraffins, isoparaffins and naphthenes. For reason of greater solvency power, preferably, the aliphatic hydrocarbon solvent is rich in naphthenes, for instance at least 34% by weight, more preferably at least 4% by weight.

The aliphatic hydrocarbon is preferably selected from "SHELLSOL TD" (typical initial boiling point, dry point and flash point of 172 °C, 190 °C, respectively 44 °C, 0.1% by weight aromatics); "SHELLSOL T" (187 °C, 215 °C, 58 °C, 0.1%); "SHELLSOL TK" (180 °C, 199 °C, 59 °C, 0.0015%); and more preferably from "SHELLSOL D40" (162 °C, 197 °C, 40 °C, 0.02%); "SHELLSOL D60" (187 °C, 211 °C, 66 °C, 0.02%); and "SHELLSOL D70" (195 °C, 245 °C, 73 °C, 0.03%). ("SHELLSOL" is a Shell trademark). Naturally, also corresponding, competitive grades may be used. The most preferred aliphatic hydrocarbon solvents are "SHELLSOL D60", "SHELLSOL D60S" (a narrow-cut material, higher in naphthene content than "SHELLSOL D60"), "SHELLSOL D40" and blends of these aliphatic hydrocarbon solvents.

The HBI is determined in accordance with the method disclosed in J. Paint Techn., 42(550), 1970, 636-643 by Nelson et al. Mono- or polyhydric alcohols that have a HBI of more than 0 are for instance alcohols that additionally have an ester, acid, aldehyde, ketone, or similar functionality, as well as aromatic alcohols. Such compounds have been found to have a detrimental impact on rubber swell. The glycol ethers used as component c), can behave as an electron donor or acceptor. In the presence of component b), their HBI is set at 0.

As a result of the flash point requirement, low molecular weight alcohols such as ethanol; n- or isopropanol; n-, sec-, iso- or tertiary butanol are excluded.

The RER is determined according to ASTM D 3539 relative to the evaporation rate of n-butyl acetate (nBuAc = 1). It is noted that some compounds which can be used as component in the cleaner composition of the present invention have an RER of (slightly) less than 0.01 (for instance between 0.005 and 0.01), but have a sufficiently high RER when measured in the composition of the present invention due to the synergistic effect of component a).

Preferably, the monohydric alcohol is an alkanol or alkenol of 6 to 16 carbon atoms. A monohydric alcohol with less than 6 carbon atoms is likely to be too flammable, whereas monohydric alcohols with more than 16 carbon atoms are of insufficient volatility. Very suitable monohydric alcohols are diisobutyl carbinol (DIBC or 2,6-dimethyl-4-heptanol; HBI is -17.0, RER is 0.04, flash point is 74 °C) and methylisobutyl carbinol (MIBC or 4-methyl-2-pentanol; HBI is -18.7, RER is 0.3, flash point is 41 °C).

Preferably, the polyhydric alcohol is a saturated or unsaturated glycol or glycerine of 4 to 16 carbon atoms, or an alditol of the general formula $HOCH_2(CHOH)_nCH_2OH$ wherein n is an integer in the range of 2 to 4. A polyhydric alcohol with less than 4 carbon atoms is likely to be too flammable, whereas polyhydric alcohols with more than 16 carbon atoms are of insufficient volatility. Polyhydric hydrocarbons found to be very suitable are saturated glycols of 4 to 10 carbon atoms, preferably 5 to 8 carbon atoms. Most preferred polyhydric alcohol is hexylene glycol (HBI is -20.0, RER is 0.007, flash point is 93 °C). Some glycols (such as pure hexylene glycol) are irritating to the eyes and skin. Therefore, the concentration of these irritating glycols in the cleaner composition should preferably not exceed 10 %wt.

The glycol ether preferably has the following general formula: $R-(-O-R'-)_n-OH$, in which n can be an integer of from 0 to 15.

Preferably, the glycol ether is selected from optionally alkylated mono- or polyethers of a saturated or unsaturated glycol or glycerine having 4 to 16 carbon atoms in total. In the general formula this would make that R and R' have 4 to 16 carbon atoms in total. More preferably, the glycol ether is selected from monoalkyl ethers of ethylene glycol, wherein the alkyl group contains 2 to 4 carbon atoms; monoalkyl ethers of 1,2-propylene glycol, wherein the alkyl group contains 1 to 4 carbon atoms; and monoalkylated dimers or trimers of ethylene glycol or 1,2-propylene glycol, wherein the alkyl group contains 1 to 4 carbon atoms alditols. Examples of suitable glycol ethers comprise "Ethyl OXITOL"; "Isopropyl OXITOL"; "Butyl OXITOL"; "Methyl DIOXITOL", "Butyl DIOXITOL"; and "Methyl DIPROXITOL" ("OXITOL", "DIOXITOL", "PROXITOL" and "DIPROXITOL" are Shell trade marks for the alkyl mono- respectively diether of ethylene or 1,2-propylene glycol). Some glycol ethers may be harmful by inhalation, in contact with skin and if swallowed. Accordingly, the concentration of these harmful glycol ethers in the cleaner composition should preferably not exceed 20 %wt, preferably not exceed 5 %wt. The ester which can be present as (part of) component c), is an ester of a glycol. Preferably, an ester having 4-18 carbon atoms in total, is used. An ester which can be used is an acetate ester of glycerine. Most preferably, the triacetate ester and/or the diacetate ester of glycerine are used.

In one embodiment of the invention, the cleaner composition is composed of the aliphatic hydrocarbon solvent and a monohydric alcohol, optionally in the presence of the glycol ether and/or the ester. If no glycol ether and/or ester are present, the monohydric alcohol preferably is an alcohol of 9 to 16 carbon atoms so as to form one single phase. More preferred, the monohydric alcohol is present in the range of 20-40 %wt if no glycol ether is present. For best results, the aliphatic hydrocarbon solvent preferably contains at least 34% by weight, more preferably at least 45% by weight of naphthenes.

In another embodiment of the invention, the cleaner composition is composed of the aliphatic hydrocarbon solvent and a polyhydric alcohol, optionally in the presence of the glycol ether and/or ester. If no glycol ether and/or ester is present, the polyhydric alcohol preferably is a saturated or unsaturated glycol or glycerine of 9 to 16 carbon atoms. More preferred, the polyhydric alcohol is present in the range of 10-40 %wt if no glycol ether is present. For best results, the aliphatic hydrocarbon solvent preferably contains at least 34% by weight, more preferably at least 45% by weight of naphthenes.

In a preferred embodiment, the cleaner composition consists for at least 90% by weight, preferably for at least 98% and most preferably solely consists of the aliphatic hydrocarbon solvent, the monohydric alcohol and/or the polyhydric alcohol, and optionally the glycol ether and/or ester. If no glycol ether and/or ester is present, the monohydric alcohol preferably is an alcohol of 9 to 16 carbon atoms and/or the polyhydric alcohol preferably is a saturated or unsaturated glycol or glycerine of 9 to 16 carbon atoms. A cleaner composition found to be preferred, consists of the aliphatic hydrocarbon solvent and 1-10 %wt, preferably 5-10 %wt of hexylene glycol and 1-30 %wt, preferably 5-30 %wt of MIBC and/or DIBC, more preferably DIBC. In the most preferred embodiment, the cleaner composition is composed of "SHELLSOL D60"/hexylene glycol/DIBC or "SHELLSOL D60S"/hexylene glycol/DIBC in a ratio of about 77/9/14 %wt. Further, the present invention relates to the use of such cleaner compositions for removing printing ink.

The invention is illustrated by the following examples.

## Examples

The inks used in the examples are an offset rotation ink from Premier Holland (23.23.00 cyanogen) and an offset printing ink from Sinclair and Valentine: Quickfris Pantone reflex blue (tm). The first is based on a rosin modified phenolic resin and a hydrocarbon resin; the latter is based on a rosin modified phenol resin and a soya alkyd.

In offset printers butylrubber (NBR) is commonly used as material for the blanket sheet on the printing cylinders and the cover of the inkrollers. Accordingly, the influence of the cleaner composition (rubber swell) was tested on the following NBR types:

- NBR, No. 17925, blankets offset; Shore A hardness 25, Böttcher
- NBR, No. 39935, rotation offset; Shore A hardness 35, Böttcher
- NBR, from cylinder Heidelberger offset printer.

The method for the determination of rubber swell is based on the measurement of the solvent uptake or "absorption" in a rubber specimen after a fixed immersion time. The volume change is obtained by weighing the specimen in air and water before and after immersion. The method is described in detail below.

## Rubber swell (adapted ASTM 471-79)

A rubber test specimen of 1 x 1.5 cm$^2$ (approx. 1.0 g) was immersed in alcohol and dried with filter paper to remove dirt. Next, the specimen was weighed at room temperature in air (M1) and in distilled water (M2). Then, the specimen was quickly immersed in alcohol, dried with compressed air and placed in a 30 ml weighing bottle with 25 ml test medium. This bottle was placed in a conditioned room (23 °C, 50% RH). After 25 hours immersion, the specimen was removed from the solvent, quickly immersed in alcohol, dried with compressed air, placed in a tared stoppered weighing bottle and weighed (M3). After weighing in air, the specimen was removed from the bottle and weighed in distilled water at room temperature (M4) to determine the water displacement after immersion. The procedure from removal of the specimen from the test medium to stoppering the weighing bottle and from removal from the weighing bottle to immersion in water was taken no more than 30 seconds. Any air bubbles clinging to the test specimen were removed before weighing in distilled water.

Formulas for determining rubber swell:

$$\text{Change in volume (\%)} = ((M3 - M4) - (M1 - M2))/(M1 - M2) \times 100$$

$$\text{Change in mass (\%)} = (M3 - M1)/M1 \times 100$$

## Cleaning performance

The testing of the cleaning performance of solvents and solvent blends is based on the dissolution of a film of dried ink. This film was dried for fixed time intervals. The method applied is semi-static, i.e., the amount of external energy applied into the solubility/cleaning process is as low as possible. The cleaning efficiency is rated as follows:

1: no effect cleaning composition
2: soft film of ink

3: very soft film of ink
4: very soft film of ink and minor part of film of ink removed
5: very soft film of ink and large part of film of ink removed
6-9: film of ink totally removed, ranking on residual blue colour.

Ink cleaner test

First a strip of aluminium foil (10 x 50 cm$^2$) was thoroughly cleaned with successively xylene and MEK and dried. Next, a film of ink was applied with a 100 micron applicator resulting in a dry film with a thickness of about 50 microns. After a fixed drying time (2/6 hours, 1/3/7 days) at 23 °C and 50 %RH, a small strip (approximately 0.75 x 2 cm$^2$) of coated aluminium foil was cut from the centre of the film and put in a 7 ml vial containing approximately 3 ml of cleaner composition. After 1 day rollerbank, the aluminium foil was removed from the solvent and carefully dried by dabbing with a tissue. The cleaning efficiency of the cleaner composition was obtained by evaluation of the appearance of the treated aluminium foil. The appearance of the solvent was evaluated after 1 day of sedimentation.

Results

A range of cleaner compositions have been tested, the results of which have been summarised in the table. As comparative examples are included pure "SHELLSOL D60" (CI); Low Aromatic White Spirit (LAWS, containing 17% by weight of aromatics; C2); "TRYK A" (ex Unichema, based on soya been and coconut oil; C3); and "SHEET CLEANER" (ex Smeets, based on aromatic hydrocarbon solvents and volatile alcohols; C4). The cleaner compositions in accordance with the invention are illustrated by the preferred blends of "SHELLSOL D60"/hexylene glycol/DIBC and "SHELLSOL D60S"/hexylene glycol/DIBC, both in the ratio of 77/9/14 %wt (respectively Exl and Ex2). As can be seen from the table, the best cleaning efficiency is obtained with the currently used "SHEET CLEANER", however closely followed by the cleaner compositions in accordance with the invention. Then again, the rubber swell for "SHEET CLEANER" is also the highest (albeit still tolerable).

"SHEET CLEANER" and LAWS are unattractive as their aromatic content is high. Moreover LAWS has a flash point of 39 °C and "SHEET CLEANER" has a flash point of 12 °C. This makes them more dangerous than the compositions of the present invention.

"TRYK A", having a flash point of 171 °C, does not evaporate and therefore requires a second wash. Moreover, its high viscosity makes it less attractive.

Table

| Experiments | C1 | C2 | C3 | C4 | Ex1 | Ex2 |
|---|---|---|---|---|---|---|
| Cleaning efficiency after x hours/days drying of the film of ink Premier offset printing ink | | | | | | |
| 2 hours | 3 | 4 | 9 | 9 | 9 | 9 |
| 6 hours | 3 | 4 | 9 | 9 | 9 | 9 |
| 1 day | 3 | 3 | 8 | 9 | 8 | 8 |
| 3 days | 2 | 2 | 7 | 8 | 8 | 7 |
| 7 days | 2 | 2 | 6 | 7 | 6 | 6 |
| Efficiency ranking | 6 | 5 | 3/4 | 1 | 2 | 3/4 |
| Sinclair and Valentine offset printing ink | | | | | | |
| 2 hours | 4 | 4 | 6 | 7 | 6 | 6 |
| 6 hours | 4 | 4 | 5 | 7 | 6 | 6 |
| 1 day | 3 | 3 | 5 | 6 | 5 | 5 |
| 3 days | 1 | 1 | 1 | 2 | 1 | 1 |
| 7 days | 1 | 1 | 1 | 1 | 1 | 1 |
| Efficiency ranking | 6 | 5 | 4 | 1 | 2/3 | 2/3 |
| %Vol. rubber swell | | | | | | |
| NBR No. 17925 | 1.33 | 9.98 | 3.42 | 33.11 | 7.57 | 6.65 |

Table   (continued)

| Experiments | C1 | C2 | C3 | C4 | Ex1 | Ex2 |
|---|---|---|---|---|---|---|
| %Vol. rubber swell | | | | | | |
| NBR No. 39935 | 0.04 | 6.05 | 1.10 | 28.19 | 4.63 | 3.34 |
| NBR (Heidelberger printer) | 0.79 | 8.11 | 1.84 | 30.61 | 7.18 | 5.99 |
| Rubber swell ranking | 1 | 5 | 2 | 6 | 4 | 3 |
| 90% evap. time (s) | 11750 | 2470 | >>100000 | 1923 | 6382 | 9452 |
| Viscosity (mPa.s) | 1.27 | 0.84 | 5.71 | 1.00 | 1.69 | 1.63 |
| Flash point (°C) | 161 | 39 | 171 | 12 | 61 | 62 |

## Claims

1. Use of a cleaner composition for removing ink, which cleaner composition comprises:

    a) one or more aliphatic hydrocarbon solvents;
    b) from 2-40 %wt of one or more (i) monohydric alcohols and/or (ii) polyhydric alcohols, each having a hydrogen bonding index (HBI) of less than 0 and a relative evaporation rate (RER) of at least 0.005; and
    c) from 0-30 %wt of one or more glycol ethers and/or esters, wherein the composition has a flash point of 50-80 °C, and contains at most 1% by weight of aromatic hydrocarbons.

2. Use as claimed in claim 1, wherein the aliphatic hydrocarbon solvent of the composition has a boiling range of 175 to 250 °C, and contains at most 0.1% by weight of aromatic hydrocarbons.

3. Use as claimed in claim 1 or 2, wherein component b) (i) is selected from monohydric alcohols having 6 to 16 carbon atoms.

4. Use as claimed in any one of claims 1 to 3, wherein component b) (ii) of the composition is selected from glycols or glycerines of 4 to 16 carbon atoms, or alditols of the general formula $HOCH_2(CHOH)_nCH_2OH$, wherein n is an integer in the range of 2 to 4.

5. Use as claimed in claim 4, wherein component b) of the composition is hexylene glycol.

6. Use as claimed in any one of claims 1 to 5, wherein component c) of the composition is selected from optionally alkylated mono- or polyethers of a glycol or glycerine having 4 to 16 carbon atoms in total and/or glycol esters having 4-18 carbon atoms in total.

7. Use as claimed in any one of claims 1 to 6, wherein the cleaner composition is composed of 80-60 %wt of one or more of the aliphatic hydrocarbon solvents containing at least 45% by weight naphthenes and 20-40 wt of either one or more of the monohydric alcohols or one or more of the polyhydric alcohols, each of 9 to 16 carbon atoms.

8. Use as claimed in any one of claims 1 to 7, wherein the composition consists of the one or more aliphatic hydrocarbon solvents, the one or more monohydric alcohols and the one or more polyhydric alcohols, optionally together with the one or more glycol ethers and/or esters.

9. Use as claimed in claim 8, wherein the composition is composed of the one or more aliphatic hydrocarbon solvents and 1-10 %wt, preferably 5-10 %wt of hexylene glycol and 1-30 %wt of MIBC and/or DIBC.

## Patentansprüche

1. Verwendung einer Reinigerzusammensetzung zur Beseitigung von Tinte, welche Reinigerzusammensetzung

    a) ein oder mehrere aliphatische Kohlenwasserstofflösungsmittel;

b) von 2 bis 40 Gew.-% eines oder mehrerer (i) einwertiger Alkohole und/oder (ii) mehrwertiger Alkohole, die jeweils einen Wasserstoffbindungsindex (HBI) von kleiner als 0 und eine relative Verdampfungsrate (RER) von wenigstens 0,005 aufweisen; und

c) von 0 bis 30 Gew.-% eines oder mehrerer Glycolether und/oder -ester umfaßt, wobei die Zusammensetzung einen Flashpunkt von 50 bis 80°C aufweist und höchstens 1 Gew.-% aromatische Kohlenwasserstoffe enthält.

2. Verwendung nach Anspruch 1, worin das aliphatische Kohlenwasserstofflösungsmittel der Zusammensetzung eines Siedebereich von 175 bis 250°C aufweist und höchstens 0,1 Gew.-% aromatische Kohlenwasserstoffe enthält.

3. Verwendung nach Anspruch 1 oder 2, worin die Komponente b) (i) unter einwertigen Alkoholen mit 6 bis 16 Kohlenstoffatomen ausgewählt ist.

4. Verwendung nach einem der Ansprüche 1 bis 3, worin die Komponente b) (ii) der Zusammensetzung unter Glykolen oder Glyzerinen mit 4 bis 16 Kohlenstoffatomen oder Alditen mit der allgemeinen Formel $HOCH_2(CHOH)_nCH_2OH$ ausgewählt ist, worin n eine ganze Zahl von 2 bis 4 bedeutet.

5. Verwendung nach Anspruch 4, worin die Komponente b) der Zusammensetzung Hexylenglykol ist.

6. Verwendung nach einem der Ansprüche 1 bis 5, worin die Komponente c) der Zusammensetzung unter gegebenenfalls alkylierten Mono- oder Polyethern eines Glykols oder Glyzerins mit insgesamt 4 bis 16 Kohlenstoffatomen und/oder Glykolestern mit insgesamt 4 bis 18 Kohlenstoffatomen ausgewählt ist.

7. Verwendung nach einem der Ansprüche 1 bis 6, worin die Reinigerzusammensetzung aus 80 bis 60 Gew.-% eines oder mehrerer aliphatischer Kohlenwasserstofflösungsmittel mit einem Gehalt an wenigstens 45 Gew.-% Naphthenen und aus 20 bis 40 Gew.-% entweder eines oder mehrerer einwertiger Alkohole oder eines oder mehrerer mehrwertiger Alkohole mit jeweils 9 bis 16 Kohlenstoffatomen zusammengesetzt ist.

8. Verwendung nach einem der Ansprüche 1 bis 7, worin die Zusammensetzung aus dem einen oder den mehreren aliphatischen Kohlenwasserstofflösungsmitteln, dem einen oder den mehreren einwertigen Alkoholen und dem einen oder den mehreren mehrwertigen Alkoholen, gegebenenfalls zusammen mit dem einen oder den mehreren Glykolethern und/oder -estern, besteht.

9. Verwendung nach Anspruch 8, worin die Zusammensetzung aus dem einen oder den mehreren aliphatischen Kohlenwasserstofflösungsmitteln und 1 bis 10 Gew.-%, vorzugsweise 5 bis 10 Gew.-% Hexylenglykol und 1 bis 30 Gew.-% MIBC und/oder DIBC zusammengesetzt ist.

**Revendications**

1. Utilisation d'une composition de nettoyage pour éliminer l'encre, laquelle composition de nettoyage comprend :

a) un ou plusieurs solvants hydrocarbonés aliphatiques,
b) de 2 à 40% en poids d'un ou plusieurs (i) alcools monohydroxylés et/ou (ii) alcools polyhydroxylés possédant chacun un indice de liaison d'hydrogène (ILH) inférieur à 0 et un indice d'évaporation relative (IER) d'au moins 0,005 et
c) de 0 à 30% d'un ou plusieurs esters et/ou éthers glycoliques, où la composition possède un point d'éclair de 50 à 80°C et contient au maximum 1% en poids d'hydrocarbures aromatiques.

2. Utilisation suivant la revendication 1, caractérisée en ce que le solvant hydrocarboné aliphatique de la composition possède une plage d'ébullition de 175 à 250°C et contient au maximum 0,1% en poids d'hydrocarbures aromatiques.

3. Utilisation suivant la revendication 1 ou 2, caractérisée en ce que le composant b) (i) est choisi parmi les alcools monohydroxylés qui possèdent de 6 à 16 atomes de carbone.

4. Utilisation suivant l'une quelconque des revendications 1 à 3, caractérisée en ce que le composant b) (ii) de la composition est choisi parmi les glycérines et les glycols comportant de 4 à 16 atomes de carbone, ou les alditols de la formule générale $HOCH_2(CHOH)_nCH_2OH$, dans laquelle n est un nombre entier dont la valeur varie de 2 à 4.

5. Utilisation suivant la revendication 4, caractérisée en ce que le composant b) de la composition est l'hexylèneglycol.

6. Utilisation suivant l'une quelconque des revendications 1 à 5, caractérisée en ce que le composant c) de la composition est choisi parmi les monoéthers ou les polyéthers éventuellement alkylés d'une glycérine ou d'un glycol possédant de 4 à 16 atomes de carbone au total et/ou les esters glycoliques possédant de 4 à 18 atomes de carbone au total.

7. Utilisation suivant l'une quelconque des revendications 1 à 6, caractérisée en ce que la composition de nettoyage se compose de 80 à 60% en poids d'un ou plusieurs des solvants hydrocarbonés aliphatiques contenant au moins 45% en poids de naphtènes et de 20 à 40% en poids d'un ou plusieurs des alcools monohydroxylés ou d'un ou plusieurs des alcools polyhydroxylés, comportant chacun de 9 à 16 atomes de carbone.

8. Utilisation suivant l'une quelconque des revendications 1 à 7, caractérisée en ce que la composition est constituée d'un ou plusieurs des solvants hydrocarbonés aliphatiques, d'un ou plusieurs des alcools monohydroxylés et d'un ou plusieurs des alcools polyhydroxylés, éventuellement en même temps que d'un ou plusieurs des esters et/ou des éthers glycoliques.

9. Utilisation suivant la revendication 8, caractérisée en ce que la composition se compose d'un ou plusieurs solvants hydrocarbonés aliphatiques et de 1 à 10% en poids, de préférence, 5 à 10% en poids, d'hexylèneglycol et de 1 à 30% en poids de MIBC et/ou de DIBC.